(19) Europäisches Patentamt
European Patent Office
Office européen des brevets

(11) **EP 1 848 617 B1**

(12) **FASCICULE DE BREVET EUROPEEN**

(45) Date de publication et mention
de la délivrance du brevet:
**27.05.2009 Bulletin 2009/22**

(21) Numéro de dépôt: **05825168.7**

(22) Date de dépôt: **13.12.2005**

(51) Int Cl.:
***B60S 1/08*** (2006.01)

(86) Numéro de dépôt international:
**PCT/FR2005/051083**

(87) Numéro de publication internationale:
**WO 2006/072720 (13.07.2006 Gazette 2006/28)**

(54) **ESSUIE-VITRE COMPORTANT UN DISPOSITIF DE PROTECTION DE SON MOTEUR ELECTRIQUE**

SCHEIBENWISCHER MIT EINER SCHUTZVORRICHTUNG FÜR SEINEN ELEKTROMOTOR

WINDSCREEN WIPER COMPRISING A PROTECTION DEVICE FOR THE ELECTRIC MOTOR THEREOF

(84) Etats contractants désignés:
**AT BE BG CH CY CZ DE DK EE ES FI FR GB GR HU IE IS IT LI LT LU LV MC NL PL PT RO SE SI SK TR**

(30) Priorité: **29.12.2004 FR 0414035**

(43) Date de publication de la demande:
**31.10.2007 Bulletin 2007/44**

(73) Titulaire: **RENAULT S.A.S.**
**92100 Boulogne Billancourt (FR)**

(72) Inventeur: **FLORENTINO, François**
**F-78170 La Celle Saint Cloud (FR)**

(74) Mandataire: **Guyon, Rodolphe C. et al**
**Renault Technocentre**
**Service 0267**
**TCR GRA 236**
**1, Avenue du Golf**
**78288 Guyancourt Cedex (FR)**

(56) Documents cités:
**EP-A- 0 803 413**     **DE-A1- 10 157 386**
**US-A- 5 630 009**     **US-A- 5 867 000**

**Description**

**DOMAINE TECHNIQUE**

L'invention concerne un essuie-vitre, notamment pour un véhicule automobile, cet essuie-vitre comprenant un moteur électrique d'entraînement à courant continu pour entraîner un mécanisme d'essuie-vitre. Le moteur comporte un rotor, un premier, un deuxième et un troisième charbons frottant sur son rotor, le premier charbon étant mis à la masse, le deuxième charbon étant relié sélectivement à une source de courant continu par l'intermédiaire d'un contacteur, le troisième charbon n'étant ni mis à la masse ni relié à la source de courant continu, un sous-ensemble de détection du blocage du moteur électrique pour délivrer une information de blocage du moteur et des moyens pour délivrer un signal de commande du contacteur qui interrompt la liaison avec la source de courant continu.

Elle concerne également un dispositif de protection d'un moteur à courant continu, le moteur comportant un premier, un deuxième et un troisième charbons frottant sur son rotor, le premier charbon étant mis à la masse, le deuxième étant relié sélectivement à une source de courant continu par l'intermédiaire d'un contacteur pour l'alimentation électrique en courant continu, le troisième charbon n'étant ni mis à la masse ni relié à la source de courant continu.

Enfin, l'invention concerne un procédé de protection d'un moteur à courant continu du type décrit ci-dessus contre une destruction par échauffement en cas de blocage du moteur d'entraînement du mécanisme essuie-vitre.

Un essuie-vitre de véhicule automobile comporte un moteur électrique d'entraînement d'un mécanisme de type bielle/manivelle qui permet de transformer un mouvement rotatif en un mouvement alternatif de manière à produire des battements alternatifs des balais d'essuie-glace sur le pare-brise du véhicule en cas de pluie. Ces mécanismes peuvent généralement fonctionner selon un mode à petite vitesse et un mode à grande vitesse pour s'adapter aux conditions de pluie, l'écart entre les deux modes étant au minimum de 15 battements par minute. La mise en route de l'essuie-vitre peut être commandée manuellement par un contacteur, par exemple situé au volant, actionné par le conducteur du véhicule. L'essuie-vitre peut également être mis en route automatiquement par un capteur de pluie qui commande le fonctionnement de l'essuie-vitre en mode petite vitesse ou grande vitesse. Lorsqu'une demande d'essuyage est émise, elle est transmise à une unité de calcul logique qui commande des relais de puissance de manière à faire fonctionner le moteur en mode à petite vitesse ou à grande vitesse, selon le cas.

Toutefois, il peut arriver que le moteur électrique se bloque. Dans ce cas, l'intensité du courant dans les enroulements du rotor augmente, ce qui conduit à un échauffement qui peut se traduire par la destruction du moteur. C'est pourquoi, afin de protéger le moteur électrique en cas de blocage des balais d'essuie-vitre, il est courant de prévoir un dispositif de protection.

Le brevet US 5 630 009 décrit un procédé et un dispositif pour commander un moteur électrique à courant continu d'essuie-vitre qui comporte un dispositif de protection thermique comprenant un bilame qui coupe l'alimentation du moteur en cas d'échauffement excessif.

On connaît également des dispositifs de protection du moteur électrique comportant une came montée sur l'axe de sortie du moteur. Cette came commande l'ouverture et la fermeture d'un contact électrique de telle sorte que l'on produit un signal électrique rectangulaire dont la fréquence est la même que celle du moteur. Si le moteur est bloqué le signal ne varie plus. L'ordinateur de bord (l'unité arithmétique et logique) réagit et coupe alimentation du moteur. Un programme géré par l'unité arithmétique et logique (boucle de test marche/arrêt) protège le moteur de l'échauffement durant le blocage et permet son retour à un fonctionnement normal quand le blocage aura disparu.

Toutefois, en cas de défaillance de la détection du signal rectangulaire, par exemple si le fil qui relie la came à l'unité arithmétique et logique est coupé, ou encore si la came est défectueuse, l'unité arithmétique et logique réagira de la même façon que si le moteur était bloqué alors qu'en réalité ce dernier tourne normalement. Comme on le comprend, il en résulte un risque grave dans le cas où le véhicule roule, notamment à grande vitesse, sous la pluie parce que l'unité arithmétique interrompra l'alimentation du moteur électrique. Le pare-brise n'étant plus balayé, le conducteur n'aura plus de visibilité, ce qui peut se traduire par un accident.

C'est la raison pour laquelle ce mode de protection du moteur électrique contre une surchauffe en cas de blocage n'est activé que dans les deux conditions suivantes :

véhicule roulant à moins de 7km/h ;
mise à l'arrêt de la commande manuelle avant que le véhicule n'atteigne 7km/h.

En dehors de ces deux cas, le dispositif de protection n'est pas activé. S'il y a réellement blocage, et si ce blocage persiste durant le roulage, le moteur grille. C'est la raison pour laquelle il est fréquent d'implanter une protection thermique supplémentaire, par exemple une protection par bilame comme décrit dans le brevet américain US 5 630 009. Toutefois, cette solution nécessite l'utilisation d'un composant supplémentaire dans le circuit électrique, donc une augmentation du coût. Par ailleurs, elle a pour effet d'augmenter la résistance en ligne, et donc les pertes énergétiques en ligne.

La présente invention a pour objet un essuie-vitre et un dispositif de protection d'un moteur électrique qui remédient à ces inconvénients.

S'agissant de l'essuie-vitre, ces buts sont atteints par le fait qu'il comprend des moyens de mesure de la tension entre le premier et le troisième charbons afin d'obtenir une première valeur de tension mesurée ; un comparateur pour comparer la première tension mesurée à une première valeur de seuil afin de générer une seconde information de blocage du moteur électrique si la comparaison a déterminé que la première tension mesurée est inférieure à la première valeur de seuil.

La seconde information de blocage du moteur électrique constitue une information redondante de contrôle de l'information fournie par le sous-ensemble de détection du blocage du moteur électrique.

Avantageusement, l'essuie-vitre ou le dispositif de protection du moteur peuvent comprendre en outre des moyens de mesure de la tension entre le premier et le deuxième charbons afin d'obtenir une deuxième valeur mesurée fournie au comparateur et pour comparer cette deuxième valeur de tension mesurée à une deuxième valeur de seuil.

Cette seconde valeur mesurée peut constituer une autre information redondante permettant de confirmer le blocage du moteur.

Selon le procédé, dans une première étape, le moteur électrique de l'essuie-vitre fonctionnant normalement, on mesure d'une part la tension entre le premier et le deuxième charbon afin d'obtenir une première valeur de seuil et d'autre part, la tension entre le premier et le troisième charbons afin d'obtenir une deuxième valeur de seuil.

Ces valeurs ayant été mesurées et enregistrées dans un registre de mémoire de l'unité arithmétique et logique du véhicule, durant le fonctionnement courant de l'essuie-vitre, on mesure d'une part la tension entre le premier charbon et le deuxième charbon et on compare la valeur mesurée à la première valeur de seuil. D'autre part, et optionnellement, on mesure la tension entre le premier charbon et le troisième charbon et on compare la valeur ainsi mesurée à la deuxième valeur de seuil. On interrompt l'alimentation électrique du moteur si la comparaison a déterminé que la première valeur mesurée est inférieure à la première valeur de seuil et/ou que la deuxième valeur mesurée est inférieure à la deuxième valeur de seuil.

D'autres caractéristiques et avantages de l'invention apparaîtront encore à la lecture de la description qui suit, d'exemples de réalisation donnés à titre illustratif en référence aux figures annexées. Sur ces figures :

- la figure 1 représente une vue générale d'un ensemble esssuie-vitre de type conventionnel ;
- les figures 2 et 3 sont des schémas électriques respectivement du fonctionnement en mode à petite vitesse et en mode à grande vitesse du moteur électrique de l'ensemble essuie-vitre de la figure 1 ;
- la figure 4 est une vue de détail de l'ensemble essuie-vitre représenté sur la figure 1 montrant un sous-ensemble de protection du moteur utilisant une came montée sur l'axe de ce dernier ;
- la figure 5 est une courbe qui représente la tension du signal de came en fonction du temps ;
- la figue 6 est une vue générale d'un ensemble essuie-vitre conforme à la présente invention ;
- la figure 7 est un schéma électrique qui illustre la force électromotrice induite dans le circuit grande vitesse lorsque le moteur fonctionne en mode petite vitesse ;
- la figure 8 est un schéma électrique qui illustre la tension induite dans le circuit petite vitesse lorsque le moteur fonctionne en mode à grande vitesse ;
- la figure 9 est un relevé de la tension dans le circuit grande vitesse, respectivement en fonctionnement en mode grande vitesse et en mode petite vitesse ;
- la figure 10 est un relevé de la tension dans le circuit petite vitesse, respectivement en mode de fonctionnement à grande vitesse et en mode de fonctionnement petite vitesse.

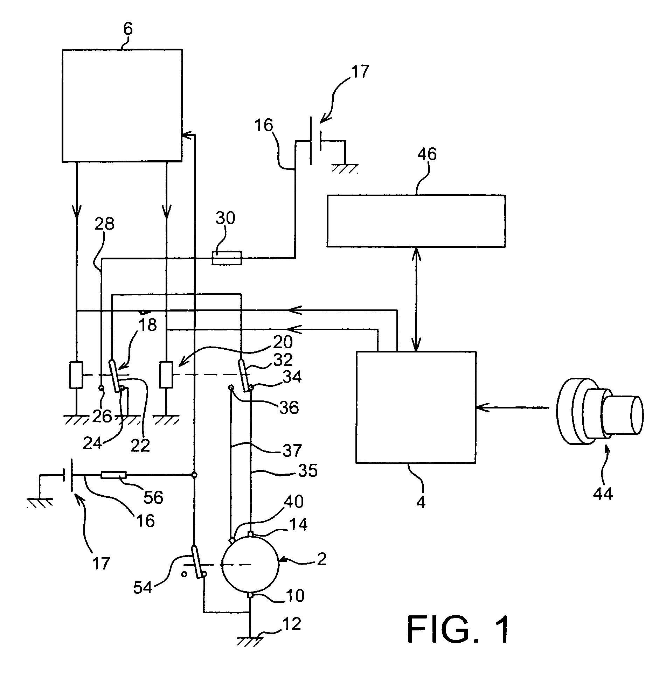

L'ensemble essuie-vitre représenté sur la figure 1 comprend un moteur électrique 2, une première unité arithmétique et logique 4, appelée unité de commande habitacle (UCH) et une seconde unité arithmétique et logique 6, appelée unité de servitude moteur (US).

Le moteur 2 est un moteur à courant continu. Il comporte de manière classique une partie fixe, le stator, et une partie tournante, le rotor. Le stator est constitué d'aimants permanents qui engendrent un champ magnétique $\Phi$. Le rotor est une pièce métallique circulaire allongée. Il comporte un nombre d'encoches dans lesquelles sont enroulés des fils conducteurs électriques formant des spires. Le moteur électrique 2 est un moteur à deux vitesses de rotation. Il peut fonctionner à une première vitesse de rotation, appelée « petite vitesse » et à une seconde vitesse de rotation, supérieure à la première, appelée « grande vitesse ». Seul le rotor est alimenté électriquement. A cet effet un premier charbon ou balai 10, constituant un contact frottant, est relié par des liaisons électriques 12 à une borne de la source de courant électrique. La borne négative dans le cas présent formant masse. Un second charbon 14 est relié sélectivement à l'autre borne 16 de la source de courant électrique 17, par exemple la batterie d'accumulateur du véhicule. Un relais à petite vitesse 18 et un relais à grande vitesse 20 sont interposés entre la borne positive 16 et le second charbon frottant 14. Une palette 22 du relais à petite vitesse 18 est en contact soit avec une borne 24 mise à la masse, soit avec une borne 26 reliée par l'intermédiaire d'un conducteur électrique 28 à la borne 16. Un fusible de protection 30 est optionnellement placée en série sur le conducteur 28. Une palette 32 du relais à grande vitesse 20 est en contact soit avec une borne 34 reliée par un conducteur 35 au deuxième charbon 14, soit avec une borne 36 reliée par un conducteur 37 à un troisième charbon 40. Dans cet exemple le relais à petite vitesse 18 et le relais à grande vitesse 20 sont disposés en série. Lorsque la palette 22 du relais à petite vitesse est reliée à la masse, le relais est en position arrêt ou off. Au contraire, lorsque la palette 22 est en contact avec la borne 26, le relais 18 est en position marche ou on. De la même manière lorsque la palette 32 du relais à grande vitesse 20 est en contact avec la borne 34 le relais est en position arrêt ou off et lorsque la palette 32 est en contact avec la borne 36, le relais 20 est en position marche ou on. Pour que le moteur électrique à courant continu 2 soit alimenté à petite vitesse, il est nécessaire que le relais à petite vitesse 18 soit en position on et que le relais à grande vitesse 20 soit en position off. Pour que le moteur 2 soit alimenté à grande vitesse, il est nécessaire que les relais 18 et 20 soient tous les deux en position on.

L'unité de commande de l'habitacle 4 est reliée à un commutateur de commande 44, disposé par exemple sous le volant. Le commutateur 44 comporte quatre positions : une position arrêt, une position marche à petite vitesse, une position marche à grande vitesse et une position automatique. Lorsque le commutateur est en position automatique, la mise en marche et l'arrêt des balais d'essuie-glace sont commandés par un capteur de pluie 46 relié à l'unité de commande de l'habitacle 4. L'unité 4 est reliée par des conducteurs électriques aux bobines des relais à petite vitesse et grande vitesse 18 et 20 de manière à commander les palettes de chacun de ces relais et, par suite, la mise en route et l'arrêt des balais d'essuie-glace. L'unité de servitude moteur 6 est également apte, comme on l'expliquera ultérieurement, à commander les relais 18 et 20.

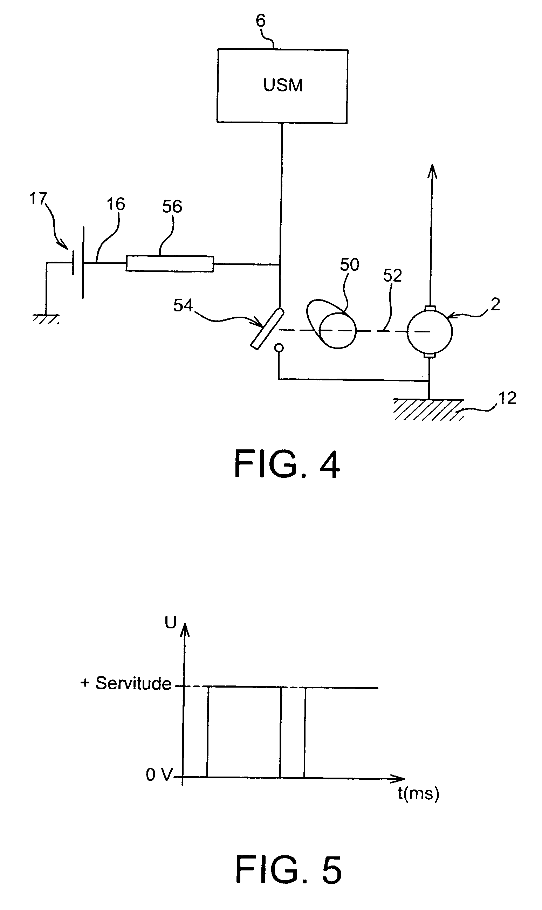

Il peut arriver que le moteur électrique se bloque par exemple parce que les balais d'essui-glace rencontrent un obstacle sur le pare-brise. Dans ce cas l'intensité du courant qui parcourt les spires des voies d'enroulement du rotor augmente, ce qui conduit à son échauffement et éventuellement à sa destruction. Afin d'éviter cela, l'ensemble essuie-vitre de la figure 1 est équipé d'un sous-ensemble de détection de blocage du moteur. De manière connue, ce sous-ensemble, représenté en détail sur la figure 4, comporte une came 50 montée sur l'axe 52 du rotor du moteur électrique. La came 50 commande l'ouverture et la fermeture d'un contact électrique 54 relié à l'une de ses bornes, à la masse 12 et à son autre borne au pôle positif de la batterie d'accumulateur 17 à travers un ensemble de composants électroniques 56 permettant le filtrage et la régulation aux bornes de l'interrupteur 54 qui est également relié à l'unité de servitude moteur 6. De cette manière ce sous-ensemble produit une tension de forme rectangulaire ayant la même fréquence que la rotation du moteur. Cette tension est représentée sur la figure 5. Lorsque le contact 54 est fermé, la tension est égale à 0. Lorsque le contact est ouvert, la tension U perçue par l'unité 6 est sensiblement égale à la tension de la batterie d'accumulateur 17.

En cas de blocage du moteur, la tension U ne varie plus.

Elle est en permanence égale à 0 ou à la tension de servitude (tension de la batterie d'accumulateur 17), selon la position dans laquelle le moteur s'est bloqué. Lorsque l'unité 6 détecte cette situation, elle commande le relais à petite vitesse 18 de manière à le faire passer dans sa position arrêt ce qui interrompt l'alimentation du moteur électrique. Un programme géré par l'unité de servitude moteur 6 (boucle de test « on/off ») protège le moteur de l'échauffement durant le blocage et permet son fonctionnement normal quand le blocage disparaît.

Toutefois il peut se produire que le sous-ensemble de détection de blocage du moteur fournisse une indication éronnée parce que le fil qui le relie à l'unité arithmétique et logique 6 est coupé ou encore parce que la came est défectueuse (usée). Dans ce cas, l'unité 6 interprétera l'absence de variation du signal comme un blocage du moteur électrique 2 et interrompra son alimentation. Si le véhicule roule à vive allure sous une pluie battante il en résultera une brusque perte de visibilité et par conséquent un risque grave d'accident. C'est la raison pour laquelle, pour assurer la sûreté de fonctionnement de l'essuie-glace, le dispositif de détection du blocage n'est activé que dans les conditions suivantes :

- le véhicule roule à une vitesse inférieure à 7km/h ;
- le commutateur 44 de commande manuelle de l'essuie-glace a été placé par le conducteur du véhicule en position arrêt avant une vitesse supérieure à 7km/h.

En dehors de ces cas, le dispositif de détection du blocage du moteur ne coupera pas l'alimentation de ce dernier. Par suite si la détection constatée correspond à un blocage effectif, le moteur grillera.

Il est connu de remédier à cet inconvénient en implantant une protection thermique supplémentaire, par exemple un disjoncteur comportant un élément bimétallique, qui interrompra l'alimentation en courant électrique du moteur si sa température s'élève. Toutefois, l'utilisation de cette protection thermique a un coût. D'autre part, elle augmente les pertes électriques en ligne.

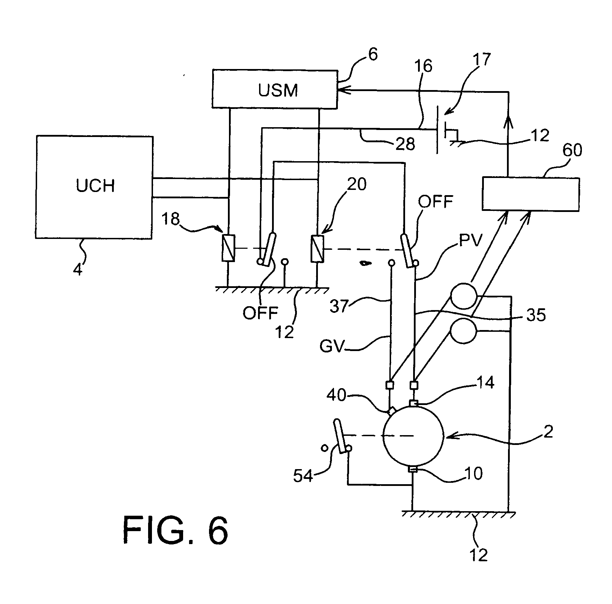

On a représenté sur la figure 6 un ensemble essuie-vitre conforme à la présente invention qui remédie aux inconvénients énumérés précédemment. Il est généralement semblable à l'ensemble essuie-vitre qui a été décrit en référence aux figures 1 à 4. Il comporte de la même manière, un moteur électrique à courant continu 2, une unité de commande de l'habitacle 4, une unité de servitude moteur 6, une source de courant continu 17, un relais à petite vitesse 18 et un relais à grande vitesse 20. Trois balais ou charbons 10, 14, 40 sont en contact de frottement avec les conducteurs électriques bobinés sur le rotor du moteur 2. Le fonctionnement du dispositif est identique. Par conséquent, sa description ne sera pas reprise.

Conformément à l'invention, l'essuie-vitre comporte des moyens de mesure de la tension entre le premier charbon 10 et le troisième charbon 40 afin d'obtenir une première valeur de tension mesurée. Dans l'exemple représenté ces moyens sont constitués par un enregistreur 60 apte à mesurer et à enregistrer la tension entre les charbons 10 et 40. L'enregistreur 60 fourni la tension mesurée à l'unité de servitude moteur 6. Dans cette unité, la première valeur de tension mesurée est comparée à une première valeur de seuil afin de générer une information de blocage du moteur électrique 2 si la comparaison a déterminé que la première tension mesuré est inférieure à la première valeur de seuil. Comme expliqué précédemment, l'information de blocage du moteur 2 agit de manière à interrompre l'alimentation en courant électrique du moteur 2.

Ce système peut fonctionner isolément. Ou bien, de préférence, il peut fonctionner parallèlement à un dispositif classique de détection de blocage du moteur, tel que le système à came et interrupteur décrit en référence aux figures 4 et 5. Dans ce cas, l'information du blocage du moteur électrique 2 qui résulte de la comparaison de la première valeur de tension mesurée à une valeur de seuil constitue une seconde information de blocage du moteur électrique qui vient confirmer ou infirmer la première information de blocage du moteur électrique délivrée par le système à came et interrupteur. On dispose ainsi d'une information redondante qui augmente la fiabilité de la détection. En cas de blocage du moteur, l'information de blocage fournie par la came est confirmée par le niveau de la tension mesurée. En mode dégradé, c'est-à-dire en cas de fausse détection par la came du blocage du moteur par suite, comme expliqué précédemment, d'une coupure du fil de liaison à l'unité de servitude moteur 6 ou d'une usure de la came, le niveau de la première tension mesurée permet de détecter la fausse indication et par conséquent qu'il n'y a pas de blocage du moteur. Par conséquent, dans une telle situation, l'alimentation du moteur n'est pas interrompue. Dans ce mode de fonctionnement, le système de détection de blocage utilisant la mesure de la tension est prioritaire par rapport à l'information fournie par la came.

Ce système présente l'avantage de supprimer un composant de protection thermique, par exemple un disjoncteur, dans le circuit électrique alimentant le moteur 2. La résistance en ligne est réduite. En outre, la sûreté de fonctionnement est accrue grâce à la redondance des informations.

Sur la figure 6, l'ensemble essuie-vitre a été représenté en mode de fonctionnement à petite vitesse. Dans ce mode, le relais 18 est en position marche ou "on" tandis que le relais 20 est en position arrêt ou "off". Le charbon 14 est ainsi relié la source de courant continu 17 tandis que le troisième charbon 40 n'est pas alimenté.

Le dispositif de détection de blocage du moteur qui vient d'être décrit s'applique également lorsque l'essuie-vitre fonctionne en mode à grande vitesse. Dans ce cas, chacun des deux relais 18 et 20 est en position marche ou "on" de telle sorte que le troisième charbon 40 est relié à la source de courant continu 17 et que le deuxième charbon 14 n'est pas alimenté. Dans ce cas, les rôles des charbons 14 et 40 sont intervertis. Au lieu de mesurer la tension entre le charbon 10 et le charbon 40, on mesure la tension entre le charbon 10 et le charbon 14. Cette tension est comparée à une seconde valeur de seuil, différente de la première, afin de générer une information de blocage du moteur électrique, de la même manière que précédemment.

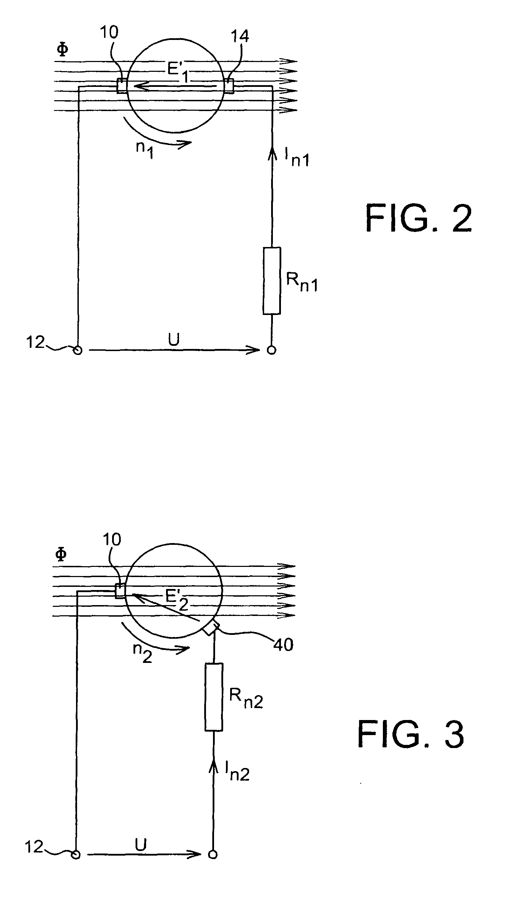

En mode petite vitesse comme représenté sur la figure 2, c'est le charbon 14, diamétralement opposé au premier charbon 10, qui est relié à la source de courant électrique. Pour un moteur à courant continu et à excitation ou flux constant tel que le moteur électrique 2 les formules de base sont :

$$E' = \frac{P}{a} x N x n x \Phi \text{ et } E'' = U - RxI \;.$$

Dans ces formules, U désigne la tension d'alimentation du rotor, R la résistance des enroulements du rotor, n la vitesse de rotation du rotor en radian par seconde, $\Phi$ le flux moyen sous un pôle, p le nombre de paires de pôles, a le nombre de paires de voies d'enroulement et N le nombre de conducteurs actifs par voie d'enroulement. Les conducteurs actifs constituent la partie du bobinage qui est en contact avec les charbons 10 et 14. Les valeurs a et p étant constante

$(K = \frac{p}{a})$, la vitesse de rotation du moteur s'exprime par la formule suivante :

$$n = \frac{U - RxI}{kxNx\Phi}$$

Lorsque l'on déplace la position d'un charbon d'alimentation, comme représenté sur la figure 3 (charbon 40) la résistance R diminue car le bobinage du rotor n'est plus alimenté de façon symétrique. Le courant augmente proportionnellement parce que le produit RxI est constant. Les conducteurs actifs déplacés par rapport au flux principal sont soumis à un flux moins important. Le produit NxΦ diminue de telle sorte que la vitesse de rotation du moteur augmente. En conséquence, la vitesse de rotation du moteur n1 (figure 2) est inférieure à la vitesse de rotation n2 (figure 3).

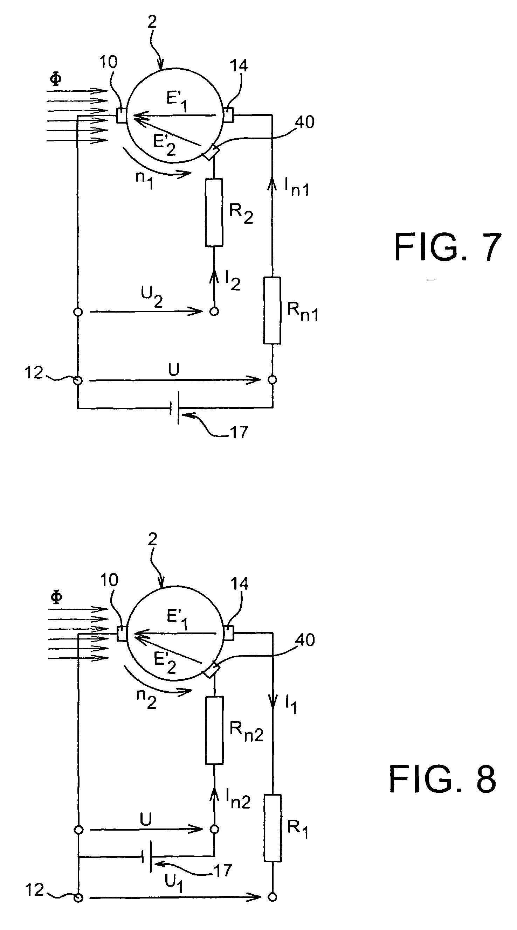

On a représenté sur la figure 7 le principe de la mesure de la première tension. Sur cette figure, le moteur 2 est alimenté à petite vitesse. Le charbon 14 est relié à la source de courant continu 17. La tension d'alimentation U fait tourner le moteur à la vitesse n1. Les formules exposées précédemment en référence à la figure 3 s'appliquent. D'autre part, le circuit qui n'est pas alimenté se comporte comme un générateur. Entre le charbon 10 et le charbon 40 il apparaît une tension $U_2 = E'_2 - (R_2 x I_2)$. Etant donné que ce circuit est ouvert, $I_2 = 0$. En conséquence, $U_2 = E'_2 = K x N_2 x \Phi_2 x n1$.

$$\frac{U}{U_2} = \frac{E'_1 + (R_{n1} x I_{n1})}{E'_2 + (R_2 x I_2)} = \frac{N x \Phi x n_1 + (R_{n1} x I_{n1})}{N_2 x \Phi_2 x n_1 + (R_2 x I_2)}$$

$$(N x \Phi) > (N_2 x \Phi_2) \quad \text{et} \quad (R_{n1} x I_{n1}) > (R_2 x I_2) \Rightarrow U > U_2.$$

Sur la figure 8, le moteur électrique 2 est alimenté en mode à grande vitesse. Le troisième charbon 40 est relié à la source de courant continu 17 sous une tension U qui fait tourner le moteur à la vitesse n2. Le circuit qui n'est pas alimenté, à savoir dans ce cas le circuit petite vitesse, se comporte comme un générateur. Sur le charbon 14 apparaît une tension $U_1 = E'_1 = k x N1 x \Phi1 x n_2$.

$$\frac{U}{U_1} = \frac{E'2 + (R2 x I2)}{E'_1 + (R_1 x I_1)} = \frac{N_2 x \Phi_2 x n_2 + (R_2 x I_{n2})}{N x \Phi x n_2 + (R_1 x I_1)}$$

$$(N x \Phi) > (N_2 x \Phi_2) \quad \text{et} \quad (R_{n1} x I_{n1}) > (R_1 x I_1) \Rightarrow U_1 > U.$$

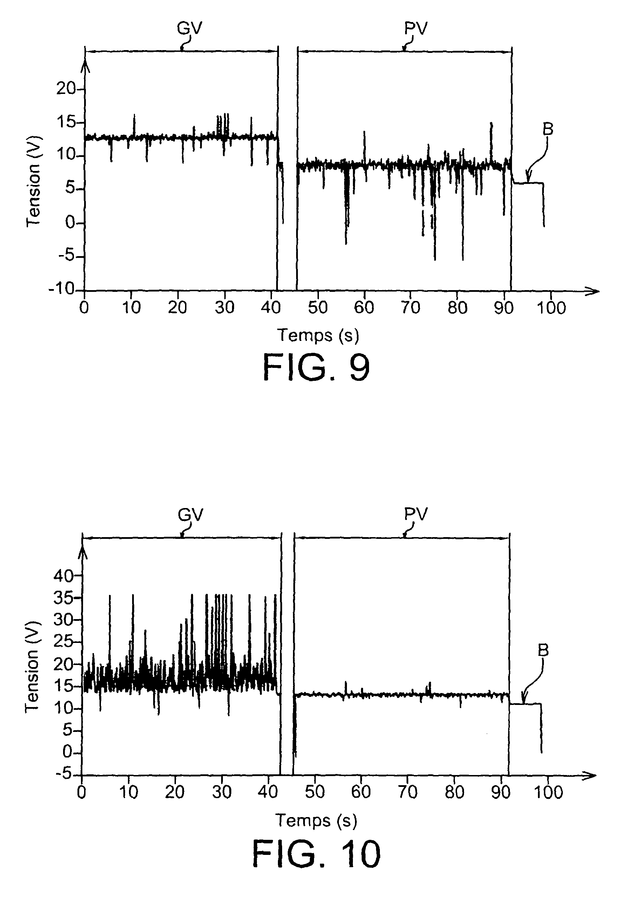

La figure 9 représente le relevé de tension dans le circuit à grande vitesse, respectivement en mode en grande vitesse (partie gauche de la figure 9) et en mode à petite vitesse (partie centrale de la figure 9).

Pour une tension de la source de courant continu 17 de 13,85 volt, la tension moyenne dans le circuit à grande vitesse en mode grande vitesse est sensiblement de 12,62 volt. Cette tension est variable entre + 9 volt et + 16 volt environ.

D'autre part, la tension dans le circuit petite vitesse est en moyenne de 8,33 volts. Cette tension est une tension induite par la rotation du moteur électrique, le circuit petite vitesse se comportant comme un générateur. Cette tension constitue la première valeur mesurée correspondant au cas de la figure 7 lorsque le moteur tourne normalement. En conséquence, la première valeur de seuil est donc 8,33 volt pour une tension d'alimentation de 13,85 volts. Naturellement si la tension d'alimentation varie, la valeur de seuil changera également.

Enfin, sur la partie droite de la figure 9 (zone B), on a représenté la tension dans le circuit grande vitesse en cas de blocage du moteur. Comme on le constate cette tension est stable, contrairement au deux cas précédents. Sa valeur est de 6 volts environ. On constate par conséquent qu'elle est inférieure à la première valeur de seuil de 8,33 volts, ce qui caractérise une situation de blocage du moteur électrique.

La figure 10 représente le relevé de la tension dans le circuit petite vitesse respectivement en mode à grande vitesse (partie gauche de la figure 10) et en mode à petite vitesse (partie centrale de la figure 10).

Pour une tension d'alimentation de 13,85 volts de la source de courant 17, la tension moyenne en mode à grande vitesse dans le circuit petite vitesse est de 17,22 volts. Cette tension est une tension induite, comme expliqué en référence à la figure 8 décrite précédemment. On constate que cette tension est très variable puisqu'elle varie entre sensiblement + 10 volt et + 35 volt. En outre, comme on le remarque, son niveau est supérieur à la tension induite dans le circuit grande vitesse dans le mode de fonctionnement à petite vitesse. Ceci s'explique par le fait que la vitesse de rotation du moteur est plus élevée. Par conséquent la force électromotrice produite par le générateur est plus importante. Elle dépasse même la tension d'alimentation de 13,85 volts. La tension moyenne de 17,22 volts constitue par conséquent une première valeur de seuil en mode de fonctionnement à grande vitesse.

La partie centrale de la figure 10 représente la tension dans le circuit à petite vitesse pour le mode à petite vitesse. Cette tension est en moyenne de 12,96 volts, toujours pour une tension d'alimentation de 13,85 volts. Elle est variable, mais ses variations sont peu importantes (+ 10 volt à + 15 volt). Enfin, sur la partie droite de la figure 10 (zone B), on trouve le relevé de la tension dans le circuit à petite vitesse en cas de blocage du moteur. Cette tension est de 12 volts environ. On constate qu'elle est inférieure à la valeur de seuil définie pour le mode de fonctionnement à grande vitesse, soit 17,22 volt comme expliqué précédemment. La détection de cette tension par l'unité de servitude moteur 6 déclenchera donc l'interruption de l'alimentation du moteur électrique.

En outre, on peut comparer, conformément à l'invention, non seulement la valeur de la tension mais aussi sa variabilité puisque l'on constate que les tensions induites que ce soit dans le circuit petite vitesse ou dans le circuit grande vitesse, varient de façon importante alors que, au contraire, en cas de blocage du moteur, la tension relevée dans ces mêmes circuits est rigoureusement constante.

**Revendications**

1. Essuie-vitre, notamment pour un véhicule automobile, comprenant un moteur électrique (2) à courant continu d'entraînement d'un mécanisme d'essuie vitre, le moteur comportant un rotor, un premier, un deuxième et un troisième charbons (10, 14, 40) frottant sur son rotor, le premier charbon (10) étant mis à la masse ; le deuxième charbon (14) étant relié sélectivement à une source de courant continu (17) par l'intermédiaire d'un contacteur ; le troisième charbon (40) étant relié sélectivement à la source de courant continu (17) ; un sous-ensemble de détection du blocage du moteur électrique (2) pour délivrer une information de blocage du moteur ; des moyens pour délivrer un signal de commande au contacteur qui interrompt la liaison du moteur avec la source de courant continu, **caractérisé en ce qu'**il comprend des moyens de mesure de la tension entre le premier et le troisième charbons (10, 40) afin d'obtenir une première valeur de tension mesurée ; un comparateur pour comparer la première tension mesurée à une première valeur de seuil afin de générer une seconde information de blocage du moteur électrique (2) si la comparaison a déterminé que la première tension mesurée est inférieure à la première valeur de seuil.

2. Essuie-vitre selon la revendication 1, **caractérisé qu'**il comprend un sous-ensemble de détection du blocage du moteur pour délivrer une seconde information de blocage du moteur et en ce que cette seconde information de blocage du moteur constitue une information redondante de contrôle de l'information fournie par le sous-ensemble de détection du blocage du moteur électrique.

3. Dispositif de protection d'un moteur à courant continu, notamment d'un moteur d'essuie-vitre, le moteur comportant un premier, un deuxième et un troisième charbons frottant sur son rotor, le premier charbon étant mis à la masse ; le deuxième charbon étant relié sélectivement à une source de courant continu par l'intermédiaire d'un contacteur pour l'alimentation du moteur électrique en courant continu ; le troisième charbon n'étant ni mis à la masse ni relié à la source de courant continu, **caractérisé en ce qu'**il comprend des moyens de mesure de la tension entre le premier et le troisième charbons afin d'obtenir une première valeur mesurée ; un comparateur pour comparer la première tension mesurée à une première valeur de seuil et pour délivrer un signal de commande du connecteur qui d'interrompt l'alimentation du moteur électrique si la comparaison a déterminé que la première valeur mesurée est inférieure à la première valeur de seuil.

4. Dispositif de protection selon la revendication 3, dans lequel le moteur est équipé d'un sous-ensemble de détection de blocage du moteur électrique pour délivrer une information de blocage de ce moteur.

5. Essuie-vitre selon la revendication 1 ou 2 ou dispositif selon la revendication 3 ou 4, **caractérisé en ce qu'**il comprend en outre des moyens de mesure de la tension entre le premier et le deuxième charbons afin d'obtenir une deuxième valeur mesurée fournie au comparateur et pour comparer cette deuxième valeur de tension mesurée à une deuxième valeur de seuil.

6. Essuie-vitre ou dispositif de protection selon la revendication 5, **caractérisé en ce que** le comparateur délivre un signal de commande qui interrompt la liaison du moteur électrique avec la source de courant continu si la comparaison a déterminé que la première valeur mesurée est inférieure à une première valeur de seuil et/ou que la seconde valeur mesurée est inférieure à une deuxième valeur de seuil.

7. Essuie-vitre selon l'une des revendications 1 ou 2 ou dispositif de protection selon l'une des revendications 3 à 5, **caractérisé en ce qu'**il comporte au moins une unité de calcul logique dans laquelle est inséré un algorithme de décision, l'information de blocage délivré par le sous-ensemble de détection de bloque du moteur, et l'information du blocage délivré par le comparateur étant alimentée dans l'unité de calcul logique afin de délivrer ou non un signal de commande qui interrompt l'alimentation du moteur.

8. Essuie-vitre selon l'une des revendications 1 ou 2 ou dispositif de protection selon l'une des revendications 3 à 7, **caractérisé en ce que** le sous-ensemble de détection du blocage du moteur comprend une came montée sur l'axe du moteur et commandant l'ouverture et la fermeture d'un contact de manière à générer un signal de même fréquence que la rotation du moteur.

9. Procédé de protection d'un moteur à courant continu, notamment d'un moteur d'essuie-vitre de véhicule automobile, comprenant un premier charbon (10) mis à la masse, et un deuxième charbon (14) relié sélectivement à une source de courant continu (17), le premier et le deuxième charbon frottant sur le rotor du moteur, **caractérisé en ce que** l'on prévoit un troisième charbon (40) frottant sur le rotor du moteur et qui n'est mis ni à la masse ni relié la source de courant continu ; **en ce que**, dans une étape préliminaire, le moteur tournant, on mesure, d'une part, la tension entre le premier et le deuxième charbons afin d'obtenir une première valeur de seuil et d'autre part, la tension entre le premier et le troisième charbon afin d'obtenir une deuxième valeur de seuil ; et **en ce que**, durant le fonctionnement courant du moteur, on mesure d'une part la tension entre le premier charbon (10) et le deuxième charbon (14) et on compare la valeur ainsi mesurée à la première valeur de seuil et, d'autre part, on mesure la tension entre le premier et le troisième charbon et on compare la valeur ainsi mesurée à la deuxième valeur de seuil ; on interrompt la liaison à la source de courant continu si la comparaison a déterminé que la première valeur mesurée est inférieure à la première valeur de seuil et/ou que la deuxième valeur mesurée est inférieure à la deuxième valeur de seuil.

10. Procédé selon la revendication 9, dans lequel le moteur peut fonctionner selon un mode à petite vitesse et selon un mode à grande vitesse, le premier charbon étant relié à la source de courant continu lorsque le moteur fonctionne en mode à petite vitesse et le troisième charbon étant relié à la source de courant continu lorsque le moteur fonctionne en mode à grande vitesse.

**Claims**

1. Windshield wiper, particularly for a motor vehicle, comprising a direct current electric motor (2) for driving a windshield wiper mechanism, the motor comprising a rotor, a first, a second and a third carbon brush (10, 14, 40) brushing on its rotor, the first carbon brush (10) being grounded; the second carbon brush (14) being connected selectively to a direct current source (17) by means of a contactor; the third carbon brush (40) being connected selectively to the direct current source (17); a subassembly for detecting the sticking of the electric motor (2) in order to deliver an item of information on the sticking of the motor; means for delivering a command signal to the contactor which interrupts the connection of the motor with the direct current source, **characterized in that** it comprises means for measuring the voltage between the first and the third carbon brushes (10, 40) in order to obtain a first measured voltage value; a comparator for comparing the first measured voltage with a first threshold value in order to generate a second item of information on the sticking of the electric motor (2) if the comparison has determined that the first measured voltage is less than the first threshold value.

2. Windshield wiper according to Claim 1, **characterized in that** it comprises a subassembly for detecting the sticking of the motor in order to deliver a second item of information on the sticking of the motor and **in that** this second item of information on the sticking of the motor forms an item of redundant information as a control of the information supplied by the subassembly for detecting the sticking of the electric motor.

3. Device for protecting a direct current motor, particularly a windshield wiper motor, the motor comprising a first, a second and a third carbon brush brushing on its rotor, the first carbon brush being grounded; the second carbon brush being connected selectively to a direct current source by means of a contactor for supplying the electric motor with direct current; the third carbon brush being neither grounded nor connected to the direct current source, **characterized in that** it comprises means for measuring the voltage between the first and the third carbon brushes in order to obtain a first measured value; a comparator for comparing the first measured voltage with a first threshold value and for delivering a command signal for the connector that interrupts the supply of the electric motor if the comparison has determined that the first measured value is less than the first threshold value.

4. Protective device according to Claim 3, in which the motor is fitted with a subassembly for detecting the sticking of the electric motor in order to deliver an item of information on the sticking of this motor.

**5.** Windshield wiper according to Claim 1 or 2 or device according to Claim 3 or 4, **characterized in that** it also comprises means for measuring the voltage between the first and the second carbon brushes in order to obtain a second measured value supplied to the comparator and in order to compare this second measured voltage value with a second threshold value.

**6.** Windshield wiper or protective device according to Claim 5, **characterized in that** the comparator delivers a command signal that interrupts the connection of the electric motor with the direct current source if the comparison has determined that the first measured value is less than a first threshold value and/or that the second measured value is less than a second threshold value.

**7.** Windshield wiper according to either of Claims 1 and 2 or protective device according to one of Claims 3 to 5, **characterized in that** it comprises at least one logic computing unit into which a decision algorithm is inserted, the item of information on sticking delivered by the motor sticking detection subassembly, and the item of information on sticking delivered by the comparator being fed into the logic computing unit in order to deliver or not a command signal that interrupts the supply of the motor.

**8.** Windshield wiper according to either of Claims 1 and 2 or protective device according to one of Claims 3 to 7, **characterized in that** the motor sticking detection subassembly comprises a cam that is mounted on the motor shaft and that commands the opening and closure of a contact in order to generate a signal of the same frequency as the rotation of the motor.

**9.** Method for protecting a direct current motor, particularly a windshield wiper motor of a motor vehicle, comprising a first carbon brush (10) that is grounded, and a second carbon brush (14) connected selectively to a direct current source (17), the first and the second carbon brush brushing on the rotor of the motor, **characterized in that** provision is made for a third carbon brush (40) that brushes on the rotor of the motor and that is neither grounded nor connected to the direct current source; **in that**, in a preliminary step, with the motor turning, on the one hand, the voltage between the first and the second carbon brushes is measured in order to obtain a first threshold value and, on the other hand, the voltage between the first and the third carbon brush is measured in order to obtain a second threshold value; and **in that**, during the normal operation of the motor, on the one hand, the voltage between the first carbon brush (10) and the second carbon brush (14) is measured and the value thus measured is compared with the first threshold value and, on the other hand, the voltage between the first and the third carbon brush is measured and the value thus measured is compared with the second threshold value; the connection to the direct current source is interrupted if the comparison has determined that the first measured value is less than the first threshold value and/or that the second measured value is less than the second threshold value.

**10.** Method according to Claim 9, wherein the motor may operate in a low speed mode and in a high speed mode, the first carbon brush being connected to the direct current source when the motor operates in low speed mode and the third carbon brush being connected to the direct current source when the motor operates in high speed mode.

**Patentansprüche**

**1.** Scheibenwischer, insbesondere für ein Kraftfahrzeug, der einen Elektromotor (2) mit Gleichstrom zum Antreiben eines Scheibenwischermechanismus aufweist, wobei der Motor einen Rotor, eine erste, eine zweite und eine dritte Kohlenbürste (10, 14, 40), die auf seinem Rotor reiben, aufweist, wobei die erste Kohlenbürste (10) an die Masse gelegt ist; wobei die zweite Kohlenbürste (14) selektiv mit einer Gleichstromquelle (17) über einen Schalter verbunden ist; wobei die dritte Kohlenbürste (40) selektiv mit der Gleichstromquelle (17) verbunden ist; eine Unterbaugruppe zum Erfassen des Blockierens des Elektromotors (2), um eine Motorblockierinformation zu liefern; Mittel zum Liefern eines Steuersignals an den Schalter, der die Verbindung des Motors mit der Gleichstromquelle unterbricht, **dadurch gekennzeichnet, dass** er Mittel zum Messen der Spannung zwischen der ersten und der dritten Kohlenbürste (10, 40) aufweist, um einen ersten Spannungsmesswert zu erzielen; einen Komparator, um die erste gemessene Spannung mit einem ersten Schwellenwert zu vergleichen, um eine zweite Blockierinformation des Elektromotors (2) zu erzeugen, wenn der Vergleich ergeben hat, dass die erste gemessene Spannung kleiner ist als der erste Schwellenwert.

**2.** Scheibenwischer nach Anspruch 1, **dadurch gekennzeichnet, dass** er eine Unterbaugruppe zum Erfassen des Blockierens des Motors aufweist, um eine zweite Blockierinformation des Motors zu liefern, und dass diese zweite Blockierinformation des Motors eine redundante Information zur Kontrolle der Information darstellt, die von der Unterbaugruppe zum Erfassen des Blockierens des Elektromotors geliefert wird.

3. Schutzvorrichtung eines Gleichstrommotors, insbesondere eines Scheibenwischermotors, wobei der Motor eine erste, eine zweite und eine dritte Kohlenbürste aufweist, die auf seinem Rotor reiben, wobei die erste Kohlenbürste an die Masse gelegt ist; wobei die zweite Kohlenbürste selektiv an eine Gleichstromquelle über einen Schalter zum Versorgen des Elektromotors mit Gleichstrom verbunden ist; wobei die dritte Kohlenbürste weder an die Masse gelegt noch mit der Gleichstromquelle verbunden ist, **dadurch gekennzeichnet, dass** sie Mittel zum Messen der Spannung zwischen der ersten und der dritten Kohlenbürste aufweist, um einen ersten gemessenen Wert zu erzielen; einen Komparator zum Vergleichen der ersten gemessenen Spannung mit einem ersten Schwellenwert, und um ein Signal zum Steuern des Schalters zu liefern, das die Stromversorgung des Elektromotors abschaltet, wenn der Vergleich ergeben hat, dass der erste gemessene Wert kleiner ist als der erste Schwellenwert.

4. Schutzvorrichtung nach Anspruch 3, bei der der Motor mit einer Unterbaugruppe zum Erfassen des Blockierens des Elektromotors ausgestattet ist, um eine Blockierinformation dieses Motors zu liefern.

5. Scheibenwischer nach Anspruch 1 oder 2 oder Vorrichtung nach Anspruch 3 oder 4, **dadurch gekennzeichnet, dass** er ferner Mittel zum Messen der Spannung zwischen der ersten und der zweiten Kohlenbürste aufweist, um einen zweiten gemessenen Wert zu erzielen, der zu dem Komparator geliefert wird, und um diesen zweiten gemessenen Spannungswert mit einem zweiten Schwellenwert zu vergleichen.

6. Scheibenwischer oder Schutzvorrichtung nach Anspruch 5, **dadurch gekennzeichnet, dass** der Komparator ein Steuersignal liefert, das die Verbindung des Elektromotors mit der Gleichstromquelle unterbricht, wenn der Vergleich ergeben hat, dass der erste gemessene Wert kleiner ist als ein erster Schwellenwert und/oder dass der zweite gemessene Wert kleiner ist als ein zweiter Schwellenwert.

7. Scheibenwischer nach einem der Ansprüche 1 oder 2 oder Schutzvorrichtung nach einem der Ansprüche 3 bis 5, **dadurch gekennzeichnet, dass** er mindestens eine logische Recheneinheit aufweist, in die ein Entscheidungsalgorithmus eingefügt ist, wobei die Blockierinformation, die von der Unterbaugruppe zum Erfassen des Blockierens des Motors geliefert wird, und die Informationen des Blockierens, die von dem Komparator geliefert werden, in die logische Recheneinheit eingegeben werden, um ein Steuersignal zu liefern oder nicht, das die Stromversorgung des Motors unterbricht.

8. Scheibenwischer nach einem der Ansprüche 1 oder 2 oder Schutzvorrichtung nach einem der Ansprüche 3 bis 7, **dadurch gekennzeichnet, dass** die Unterbaugruppe zum Erfassen des Blockierens des Motors eine Nocke aufweist, die auf die Achse des Motors montiert ist und die das Öffnen und das Schließen eines Kontakts derart steuert, dass ein Signal mit gleicher Frequenz wie die Drehung des Motors erzeugt wird.

9. Verfahren zum Schützen eines Gleichstrommotors, insbesondere eines Scheibenwischermotors eines Kraftfahrzeugs, der eine erste Kohlenbürste (10), die an die Masse gelegt ist, und eine zweite Kohlenbürste (14), die selektiv mit einer Gleichstromquelle (17) verbunden ist, aufweist, wobei die erste und die zweite Kohlenbürste auf dem Rotor des Motors reiben, **dadurch gekennzeichnet, dass** man eine dritte Kohlenbürste (40), die auf dem Rotor des Motors reibt und die weder an die Masse gelegt noch mit der Gleichstromquelle verbunden ist, vorsieht, und dass man bei einem Vorabschritt bei drehendem Motor einerseits die Spannung zwischen der ersten und der zweiten Kohlenbürste misst, um einen ersten Schwellenwert zu erzielen, und andererseits die Spannung zwischen der ersten und der dritten Kohlenbürste, um einen zweiten Schwellenwert zu erzielen, und dass man während des laufenden Funktionierens des Motors einerseits die Spannung zwischen der ersten Kohlenbürste (10) und der zweiten Kohlenbürste (14) misst und man den so gemessenen Wert mit dem ersten Schwellenwert vergleicht, und, dass man andererseits die Spannung zwischen der ersten und der dritten Kohlenbürste misst und den derart gemessenen Wert mit dem zweiten Schwellenwert vergleicht; dass man die Verbindung mit der Gleichstromquelle unterbricht, wenn der Vergleich ergeben hat, dass der erste gemessene Wert kleiner ist als der erste Schwellenwert und/oder dass der zweite gemessene Wert kleiner ist als der zweite Schwellenwert.

10. Verfahren nach Anspruch 9, bei dem der Motor in einem Langsamgangmodus und in einem Schnellgangmodus funktionieren kann, wobei die erste Kohlenbürste mit der Gleichstromquelle verbunden ist, wenn der Motor im Langsamgangmodus funktioniert, und wobei die dritte Kohlenbürste mit der Gleichstromquelle verbunden ist, wenn der Motor im Schnellgangmodus funktioniert.

FIG. 1

Φ

10                    14

$E'_1$

$n_1$

$I_{n1}$

# FIG. 2

$R_{n1}$

12

U

Φ

10

$E'_2$

$n_2$                    40

$R_{n2}$

# FIG. 3

$I_{n2}$

12

U

6

USM

17  16  56

50  52

54

2

12

# FIG. 4

U

+ Servitude

0 V

t(ms)

# FIG. 5

**FIG. 6**

FIG. 7

FIG. 8

FIG. 9

FIG. 10

## EP 1 848 617 B1

**Documents brevets cités dans la description**

- US 5630009 A